(19) Europäisches Patentamt
European Patent Office
Office européen des brevets

(11) EP 1 447 189 A1

(12) **DEMANDE DE BREVET EUROPEEN**

(43) Date de publication:
**18.08.2004 Bulletin 2004/34**

(51) Int Cl.[7]: **B27K 3/15**

(21) Numéro de dépôt: **03447024.5**

(22) Date de dépôt: **11.02.2003**

(84) Etats contractants désignés:
**AT BE BG CH CY CZ DE DK EE ES FI FR GB GR HU IE IT LI LU MC NL PT SE SI SK TR**
Etats d'extension désignés:
**AL LT LV MK RO**

(71) Demandeur: **Materia Nova A.S.B.L**
**7000 Mons (BE)**

(72) Inventeurs:
- **Persenaire, Olivier**
  **7100 La Louviere (BE)**
- **Dubois, Philippe**
  **4260 Braives (BE)**

(74) Mandataire: **Van Malderen, Joelle et al**
**Office Van Malderen,**
**Place Reine Fabiola 6/1**
**1083 Bruxelles (BE)**

(54) **Procédé de traitement d'un élément en bois**

(57) La présente invention se rapporte à un procédé de traitement d'un élément en bois, de préférence en bois dit «debout», comprenant une étape d'imprégnation dans laquelle on imprègne ledit élément avec au moins une substance d'imprégnation, et une étape de réticulation de ladite substance d'imprégnation au cours de laquelle on fait réagir celle-ci avec au moins un agent de réticulation ou agent de couplage, de manière à obtenir au sein du bois au moins un produit de réaction insoluble dans l'eau, ledit procédé étant caractérisé en ce que l'étape d'imprégnation et l'étape de réticulation de la substance d'imprégnation sont effectuées au départ d'un même bain, dit «bain d'imprégnation».

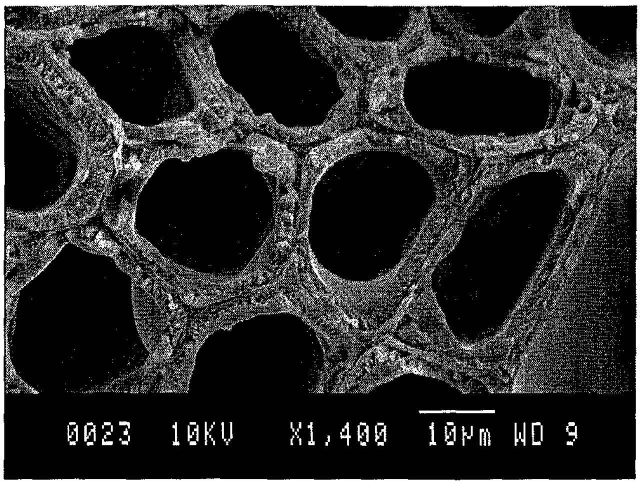


Fig. 1

EP 1 447 189 A1

## Description

### Objet de l'invention

La présente invention se rapporte à un procédé de traitement d'un élément en bois, de préférence en bois dit « debout » c'est-à-dire coupé dans son sens naturel de pousse, donc transversalement à la direction des fibres.

### Etat de la technique

Il est connu de l'homme de l'art que le bois est sensible aux variations d'humidité, ce qui se traduit par une instabilité dimensionnelle c'est-à-dire un par un gonflement ou au contraire par une rétraction de ce bois.

De ce fait, différents procédés de traitement du bois ont déjà été proposés en vue d'augmenter sa stabilité dimensionnelle. Parmi ces procédés, il a notamment été suggéré d'imprégner le bois avec différents polyuréthanes. On citera à titre d'exemples les documents US 5,310,780, US 6,191,213, JP49016603 et GB1372840. Ces procédés ont en commun qu'ils comprennent plusieurs étapes et qu'ils utilisent des solvants organiques. Selon le cas, le polyuréthane est :

- soit préformé et non greffé aux parois cellulaires du bois ;
- soit préformé et greffé ;
- soit généré *in-situ* ce qui permet également un éventuel greffage.

Malheureusement, beaucoup de ces procédés conduisent à un remplissage du lumen du bois plutôt qu'au gonflement des parois cellulaires ce qui, d'une part, empêche d'atteindre une stabilisation dimensionnelle élevée, et d'autre part a un effet néfaste à la fois sur la densité et l'aspect du matériau final.

Il a également été proposé d'utiliser des polyalkylène glycols dans le procédé d'imprégnation, comme c'est le cas dans le document de Danicher L. & Lambla M. (*Revue du bois* **3,** 33 (1975)). Ce type de procédé combine les avantages d'être facile à réaliser à l'échelle industrielle et de conférer au bois un degré de stabilisation élevé. Néanmoins, lorsque le bois est placé dans des conditions d'humidité ambiante relative proches de la saturation, les polyéthylène glycols qui sont des composés très hygroscopiques, ayant tendance à diffuser à l'extérieur du bois, ce qui entraîne un gonflement de celui-ci. Par ailleurs et de manière désavantageuse, ce procédé nécessite l'utilisation d'un solvant organique tel que le dichlorométhane.

Le brevet belge BE 799.494 décrit un procédé de traitement en deux étapes. Dans une première étape, des oligomères de polyéthylène glycol sont incorporés au bois via une imprégnation osmotique et, dans une seconde étape, un polyuréthane est formé par exposition du bois à des vapeurs de diisocyanate produites sous pression réduite, à une température supérieure à 90°C. Ce procédé présente l'inconvénient d'être long et délicat à mettre en oeuvre. En outre, ce procédé aboutit à une imprégnation inhomogène sur l'épaisseur du bois, la formation du polyuréthane étant largement favorisée en surface et à proximité de celle-ci. Enfin, l'utilisation de diisocyanate à l'état de vapeur n'offre pas toutes les garanties satisfaisantes en terme de sécurité et de respect de l'environnement.

### Buts de l'invention

La présente invention vise à fournir un procédé de traitement d'un élément en bois qui ne présente pas les inconvénients des procédés de l'état de la technique tels qu'ils ont été exposés ci-dessus.

En particulier, la présente invention vise à fournir un procédé qui permette d'obtenir un bois imprégné qui présente un degré élevé de stabilité dimensionnelle.

Elle vise également à fournir un procédé qui soit rapide et simple à mettre en oeuvre.

Un autre but de la présente invention est de fournir un procédé qui respecte au mieux l'environnement, en évitant notamment le recours à des solvants organiques.

### Définitions

Le terme de « bois » recouvre toutes les essences de feuillus comme de résineux, notamment les bois perméables et le bois dit « debout » .

Ce bois peut être notamment à l'état vert ou saturé en eau.

Par bois « debout », il y a lieu d'entendre des tronçons de bois qui ont été débités transversalement à la direction de leurs fibres.

On entend par « élément en bois » , tous les éléments à base de bois c'est-à-dire non seulement des morceaux de bois « brut » qui ont été débités d'un arbre, mais également du bois ayant subi une transformation industrielle

tel que du parquet, des panneaux ou des plans de travail (c'est-à-dire les produits dérivés du bois).

On entend par « imprégnation » l'action de faire pénétrer une ou plusieurs substances dites « substances d'imprégnation » à l'intérieur du bois.

On entend par « réticulation » l'action de lier entre elles des chaînes de polymères de façon à former un réseau. Cette réticulation est obtenue par l'action d'au moins un composé dit « agent de couplage » ou « agent de réticulation ».

On doit comprendre par ailleurs que les termes « bain d'imprégnation » désignent un bain dont la composition est telle qu'elle permet à la fois une imprégnation du bois ainsi que la polymérisation, la réticulation et/ou le greffage des substances d'imprégnation.

On entend par « greffer » l'action de créer une liaison covalente entre une molécule possédant un hydrogène actif, ici la substance d'imprégnation, et au moins une molécule constitutive des parois cellulaires du bois, telle que la cellulose.

L'expression « hydrogène actif » est utilisée pour qualifier un hydrogène appartenant à une molécule, ici à la substance d'imprégnation, et susceptible de réagir avec un groupe chimique appartenant à une autre molécule.

## Résumé de l'invention

La présente invention se rapporte à un procédé de traitement d'un élément en bois, de préférence en bois dit « debout », comprenant une étape d'imprégnation dans laquelle on imprègne ledit élément avec au moins une substance d'imprégnation, et une étape de réticulation de ladite substance d'imprégnation au cours de laquelle on fait réagir celle-ci avec au moins un agent de réticulation ou agent de couplage, de manière à obtenir au sein du bois au moins un produit de réaction insoluble dans l'eau, ledit procédé étant caractérisé en ce que l'étape d'imprégnation et l'étape de réticulation de la substance d'imprégnation sont effectuées au départ d'un même bain, dit « bain d'imprégnation ».

La présent invention se rapporte également à un procédé de traitement d'un élément en bois, de préférence en bois dit « debout », comprenant les étapes suivantes :

- on prépare un bain dit « bain d'imprégnation » et comprenant au moins une substance d'imprégnation apte à imprégner le bois, un agent de réticulation apte à provoquer la réticulation du bois, et éventuellement au moins un catalyseur ;
- on plonge ledit élément en bois dans ledit bain d'imprégnation ;
- on fait réagir ledit élément de bois avec les composants dudit bain de manière à provoquer au cours d'une étape dite « d'imprégnation » une imprégnation dudit élément avec ladite substance d'imprégnation, et au cours d'une étape de réticulation une réticulation du bois par réaction avec la substance d'imprégnation au sein du bois.

De manière avantageuse, dans le procédé de traitement selon l'invention, la substance d'imprégnation est une substance hydrosoluble mono- ou poly-fonctionnelle comprenant un ou plusieurs hydrogènes actifs aptes à gonfler les parois cellulaires du bois.

De préférence, la substance d'imprégnation est sélectionnée parmi le groupe constitué par les monols et les polyols, leurs dérivés et les mélanges de ceux-ci, de préférence polyfonctionnels.

De préférence, la substance d'imprégnation est sélectionnée parmi le groupe constitué par les polyéthers mono- et polyols, les polyacryliques mono- et polyols, les polyvinyliques mono- et polyols, les polysaccharides, les dérivés de ceux-ci dans lesquels au moins une fonction hydroxyle est substituée par une fonction thiol ou amine, et les mélanges et copolymères de ceux-ci.

Par ailleurs, dans le procédé selon l'invention, l'agent de réticulation ou agent de couplage est avantageusement sélectionné parmi le groupe constitué par les composés que sont les polyisocyanates, leurs dérivés et les mélanges de ceux-ci, les fonctions isocyanates desdits composés étant protégées dans les conditions standard d'utilisation de manière à les rendre inertes vis-à-vis de l'eau, et susceptibles d'être déprotégées par un traitement adéquat.

Selon une forme particulièrement préférée, l'agent de réticulation ou agent de couplage est un diisocyanate dont les fonctions isocyanates sont protégées, de préférence le carbonylbis-caprolactame ou CBC.

De manière particulièrement avantageuse, le produit de réaction finalement obtenu à l'issue du procédé au sein de l'élément en bois est un polyuréthane.

De préférence, le procédé selon l'invention comprend une étape supplémentaire de traitement thermique à une température comprise entre 50°C et 250°C, et de préférence entre 100 et 150°C, et dont la durée est prédéterminée.

De préférence, la durée de l'étape de traitement thermique est comprise entre 5 minutes et 5 heures, et de préférence entre 15 minutes et 120 minutes.

Avantageusement, le procédé de traitement selon l'invention comprend en outre une étape additionnelle réalisée avant l'étape de traitement thermique et correspondant à une étape de déshydratation de l'élément en bois.

De préférence, la déshydratation de l'élément en bois est réalisée par chauffage ou par dépressurisation.

La présente invention concerne un élément en bois obtenu à l'aide du procédé décrit ci-dessus.

Un autre objet de l'invention concerne un bain d'imprégnation pour mettre en oeuvre le procédé selon l'invention.

De préférence, ce bain comprend au moins une substance d'imprégnation, au moins un agent de couplage, et éventuellement un catalyseur.

Enfin, la présente invention se rapporte aussi à l'utilisation du procédé et/ou de l'élément en bois et/ou du bain d'imprégnation selon l'invention dans le domaine des revêtements, tels que les revêtements de mur et/ou de sols, les parquets, les plans de travail, les panneaux, et les meubles.

## Brève description des figures

La figure 1 représente les résultats d'une microphotographie SEM d'une coupe transversale de bois imprégné de polyuréthane suivant le procédé de l'invention.

La figure 2 représente l'évolution de l'épaisseur de la paroi cellulaire et du volume poreux du bois imprégné de polyuréthane suivant le procédé de l'invention, en fonction de la fraction en poids de polyuréthane.

## Description détaillée de l'invention

Selon l'invention, l'élément en bois est placé dans un bain dit « bain d'imprégnation » en vue d'être imprégné d'une ou plusieurs substances d'imprégnation. Ces substances d'imprégnation correspondent à des composés hydrosolubles mono- et/ou polyfonctionnels possédant un ou plusieurs atomes d'hydrogène actif et ayant comme propriété de gonfler les parois cellulaires du bois.

Les substances d'imprégnation utilisées dans la présente invention sont préférentiellement choisies parmi les catégories reprises ci-après :

1) les polyéthers mono- et polyols tels que les produits de polymérisation d'oxydes cycliques tels que les oxiranes, oxétanes, oxolanes et leurs dérivés substitués tels que l'oxyde d'éthylène, l'oxyde de propylène et le tétrahydrofurane ;
2) les polyacryliques mono- et polyols obtenus par la polymérisation en chaîne des acrylates correspondants tel que l'acide acrylique;
3) les polyvinyliques mono- et polyols obtenus par polymérisation en chaînes des monomères vinyliques correspondants tels que l'alcool polyvinylique ;
4) les polysaccharides tels que le dextran ;
5) ces mêmes polymères repris dans les catégories 1 à 4 mais pour lesquels une ou plusieurs fonctions hydroxyles sont remplacées par d'autres groupements ayant un atome d'hydrogène actif tels que les fonctions amines ou thiols ;
6) les mélanges et copolymères obtenus à partir des polymères repris dans les catégories 1 à 5.

Selon une forme d'exécution de l'invention, la substance d'imprégnation est un oligomère de poids moléculaire compris entre 100 et 5000, et de préférence entre 200 et 1000.

Le bain d'imprégnation dans lequel est placé l'élément en bois comprend également un ou plusieurs agents de couplage encore appelés agents d'extension de chaîne ou agents de réticulation, de sorte que, simultanément à l'imprégnation osmotique du bois par la ou les substances d'imprégnation, le ou lesdits agents de couplage s'incorporent au bois.

Ces agents de couplage sont des composés solubles ou dispersables en phase aqueuse et réactifs vis-à-vis de la substance d'imprégnation.

De préférence, lesdits agents de couplage sont choisis parmi les catégories suivantes :

1) les polyisocyanates protégés de manière à être inertes vis-à-vis de l'eau et des groupements possédant un hydrogène actif mais qui, après déprotection par traitement thermique, génèrent des fonctions isocyanates ;
2) les polyisocyanates réagissant préférentiellement avec les composés présentant des fonctions ayant un hydrogène actif plutôt qu'avec l'eau ;
3) les diisocyanates protégés/bloqués tels que le carbonylbis-caprolactame (CBC).

En d'autres termes, le procédé selon la présente invention correspond à un procédé d'imprégnation dit « one-pot » car à la fois la substance d'imprégnation (polymère hydrosoluble porteur des fonctions ayant un hydrogène) et

l'agent de couplage sont présents dans le bain d'imprégnation.

On notera que le bain d'imprégnation peut également comprendre un catalyseur tel que ceux utilisés dans l'état de l'art. Par exemple, les dérivés à base d'étain (IV) ou de type amine tertiaire peuvent également être incorporés au bain.

On notera également que dans le procédé selon la présente invention, l'imprégnation/réticulation est effectuée, de façon particulièrement avantageuse, à partir d'un élément en bois dans lequel le bois a été préalablement saturé en eau ou est à l'état vert. Cet élément en bois est alors immergé dans un bain d'imprégnation comprenant la substance d'imprégnation, l'agent de couplage/d'extension de chaîne et éventuellement un catalyseur.

Les composés compris dans le bain d'imprégnation peuvent être utilisés dans des rapports molaires variables que l'homme de métier pourra facilement déterminer de façon à ajuster le rapport molaire des fonctions réactives.

De façon générale, il a été observé que la porosité et, par conséquent, la densité du bois influencent fortement les conditions expérimentales à employer.

Avantageusement, la concentration de la substance d'imprégnation dans le bain d'imprégnation est comprise entre $10^{-3}$ et 5 mol.$l^{-1}$, et de préférence entre 0.1 et 1 mol. $l^{-1}$.

En outre, de façon avantageuse, la concentration de l'agent de couplage dans le bain d'imprégnation est telle que le rapport molaire des fonctions isocyanates et des fonctions ayant un hydrogène actif varie entre 0.1 et 15, et de préférence entre 1 et 5.

En général, l'imprégnation/réticulation dans le procédé de l'invention est effectuée à une température comprise entre 0°C et 100°C, de préférence entre 20°C et 60°C et de manière particulièrement avantageuse à température ambiante.

Par ailleurs, l'imprégnation/réticulation est effectuée à une pression comprise généralement entre $10^{-3}$ et $10^2$ bars, et de préférence entre 0.1 et 10 bars et de manière particulièrement avantageuse à pression atmosphérique.

L'imprégnation/réticulation peut se faire sous agitation, par exemple sous agitation mécanique.

De plus, l'imprégnation/réticulation est effectuée pendant un temps compris de préférence entre 10 minutes et 100 heures, et de préférence entre 1 et 48 heures.

Après ce temps d'imprégnation, selon une forme d'exécution préférée, l'élément en bois est déshydraté par dépressurisation et/ou chauffage au cours d'une étape de déshydratation. Cette étape a pour effet d'éliminer de façon substantielle par évaporation l'eau initialement contenue dans le bois (sous l'action de la température et/ou du vide).

Une fois cette étape de déshydratation effectuée, ou directement après l'imprégnation, une étape supplémentaire de traitement thermique est réalisée, généralement à une température comprise entre 50°C et 250°C, et de préférence entre 100°C et 150°C. Ce traitement permet la déprotection et/ou l'activation des fonctions isocyanates de l'agent de couplage/d'extension de chaîne et engendre la formation au sein du bois d'un polyuréthane réticulé, via des liens allophanates ou biurets.

Cette étape de traitement thermique de l'élément en bois a une durée généralement comprise entre 5 minutes et 5 heures, et de préférence entre 15 minutes et 120 minutes.

A l'issue de la mise en oeuvre du procédé selon l'invention, il se forme donc au sein de l'élément en bois un réseau interpénétré entre les chaînes polyuréthanes et les polymères constitutifs des parois cellulaires du bois, pouvant impliquer des réactions de greffage covalent en fonction de la stoechiométrie isocyanate/alcool initiale.

De façon tout à fait surprenante, le procédé de traitement selon l'invention, grâce à la constitution de ce réseau, permet d'améliorer la stabilité dimensionnelle du bois (et donc de l'élément en bois) et ce, sans affecter ses propriétés mécaniques ni son aspect, ce qui est particulièrement intéressant. Les propriétés mécaniques peuvent de l'élément en bois peuvent même dans certaines conditions être améliorées.

De plus, il a été observé que le procédé selon l'invention induit uniquement le gonflement des parois cellulaires du bois sans remplissage du lumen par le polyuréthane. De ce fait, il est possible de maintenir la densité du bois imprégné à une valeur peu élevée et relativement proche de la densité du bois dans les conditions d'humidité ambiante.

Selon l'invention, on peut ensuite prévoir d'appliquer un revêtement en surface de l'élément en bois imprégné de la manière décrite ci-dessus. Ce revêtement, appliqué selon les techniques bien connues de l'état de la technique peut être soit un vernis (polyuréthane ou autres), soit une peinture.

## Exemples de réalisation

### Imprégnation séquencée : exemples comparatifs

*Exemple 1*

Un échantillon A de peuplier (populus spp.) de 60 × 60 × 10 $mm^3$ (radial × tangentielle × longitudinale) a été imprégné de polyéthylène glycol 400 par immersion dans une solution aqueuse de ce dernier d'une concentration de 0.75 mol.$L^{-1}$. Après une durée d'imprégnation de 24h, la fraction en poids de PEG était de 57.8 % et la masse

volumique de l'échantillon de bois de 0.48 g.cm$^{-3}$. Après une extraction Soxhlet à l'aide d'eau pendant 48h, la totalité du PEG incorporé a été extraite attestant de la nécessité d'utiliser un agent de couplage permettant, la formation de chaînes polyuréthanes réticulés et chimiquement greffées aux parois cellulaires du bois ainsi que d'un réseau interpénétré entre ces mêmes chaînes et les polymères constitutifs des parois cellulaires.

*Exemple 2*

Deux échantillons (B et C) de peuplier (populus spp.) de 60 × 60 × 10 mm$^3$ (radial × tangentielle × longitudinale) ont été imprégnés de PEG 400 et de PEG 1000, respectivement. Après cette imprégnation à 20°C pendant 24h, ils ont été séchés (en étuve ventilée thermostatisée à 100°C pendant 16h) et immergés dans l'hexaméthylène diisocyanate liquide (HMDI) à 20°C pendant 2h. Passé ce délai, une cuisson à 100°C est effectuée pendant 16h. Les caractéristiques des échantillons obtenus de la sorte sont reprises au tableau 1.

Tableau 1 :

| **Caractéristiques des échantillons de bois imprégnés.** | | | | |
|---|---|---|---|---|
| Echantillon | Mn a) | $n_{PEG}$ (mmol.g$^{-1}$) | $n_{HMDI}$ (mmol.g$^{-1}$) | $FW_{PU}$ (%) |
| B | 400 | 0.85 | 1.98 | 67.3 |
| C | 1000 | 1.01 | 2.56 | 143.8 |

a) masse moléculaire moyenne en nombre des oligomères de PEG
b) nombre de moles de polyol incorporé par gramme de bois sec tel que déterminé par gravimétrie ;
c) nombre de moles de diisocyanate incorporé par gramme de bois sec tel que déterminé par gravimétrie ;
d) fraction massique de polyuréthane (par rapport au bois sec).

La stabilité dimensionnelle d'échantillons de peuplier non traités et traités a été mesurée en soumettant ces échantillons à des cycles « mouillage-séchage ». Les échantillons ont été soit conditionnés dans une enceinte à taux d'humidité constant (90%) soit immergés dans un bain d'eau courante pendant 41h et ce à deux reprises. La stabilité dimensionnelle est alors évaluée via la détermination de l'efficacité d'anti-gonflement (« antiswelling efficiency » ou « ASE »). Cette valeur est calculée de la manière décrite ci-après.

Premièrement, le coefficient de gonflement est déterminé via l'équation 1.

$$S = \frac{V_2 - V_1}{V_1} \qquad \text{Equation 1}$$

où

S = coefficient de gonflement volumétrique
$V_2$ = volume de l'échantillon de bois après mouillage
$V_1$ = volume de l'échantillon de bois séché avant mouillage

Il est alors possible de calculer la valeur de ASE par l'intermédiaire de l'équation 2.

$$ASE = \left| \frac{S_2 - S_1}{S_1} \right| \qquad \text{Equation 2}$$

où

ASE = efficacité d'anti-gonflement résultant du traitement du bois
$S_2$ = coefficient de gonflement volumétrique du bois traité
$S_1$ = coefficient de gonflement volumétrique du bois non traité

Au tableau 2, les tests d'extraction Soxhlet par reflux d'eau pendant 48h mettent en évidence le greffage et la réticulation du polyuréthane formé au sein du bois. En effet, la perte de masse (Δm) est inférieure ou égale à 20%, ce qui est faible comparé à l'extraction totale du PEG observée dans le cas de l'imprégnation simple (exemple 1).

D'autre part, on obtient une très bonne stabilisation dimensionnelle de l'ordre de 50% tout en conservant une masse volumique largement inférieure à l'unité.

Tableau 2 :

| Stabilité dimensionnelle, tests d'extraction Soxhlet et masse volumique. | | | | | |
|---|---|---|---|---|---|
| Echantillon | Test | $ASE_1$ (%) | $ASE_2$ (%) | Δm (%) | ρ ($g.cm^{-3}$) |
| B | humidité | 44.4±3.7 | 51.3±8.0 | 15.5 | 0.59 |
| | immersion | 59.7±1.4 | 53.3±1.4 | | |
| C | humidité | 48.2±4.6 | 50.6±5.0 | 20.7 | 0.73 |
| | immersion | 19.3±5.6 | 40.3±5.6 | | |

*Exemple 3*

Deux échantillons (D et E) de peuplier *(populus* spp.) de 60 × 60 × 10 $mm^3$ (radial × tangentielle × longitudinale) ont été imprégnés de PEG mono- et triol, respectivement. Après cette imprégnation à 20°C pendant 24h, ils ont été séchés (en étuve ventilé thermostatisée à 100°C pendant 16h) et immergés dans l'hexaméthylène diisocyanate liquide (HMDI) à 20°C pendant 2h. Passé ce délai, une cuisson à 100°C est effectuée pendant 16h. Les caractéristiques des échantillons obtenus de la sorte sont reprises au tableau 3.

Tableau 3 :

| **Caractéristiques des échantillons de bois imprégnés.** | | | | |
|---|---|---|---|---|
| **WPC** | **Polyol** | **$n_{polyol\ (mmol.g^{-1})}$** | **$n_{DI}$ ($mmol/g^{-1}$)** | **$Fw_{PU}$ (%)** |
| D | $CH_3O$-PEG-OH | 0.97 | 2.81 | 100.8 |
| E | PEG-$(OH)_3$ | 0.99 | 2.37 | 116.0 |

Au tableau 4, on constate que l'imprégnation au polyuréthane maintient la densité du bois inférieure à l'unité tout en augmentant sa stabilité dimensionnelle. Les faibles perte de masse déterminées après extraction Soxhlet témoignent de l'efficacité de greffage et de la densité de réticulation.

Tableau 4 :

| **Stabilité dimensionnelle, tests d'extraction Soxhlet et masse volumique.** | | | | | |
|---|---|---|---|---|---|
| ***Echantillon*** | ***Test*** | ***$ASE_1$* (%)** | ***$ASE_2$* (%)** | **Δ*m* (%)** | ***p ($g.cm^{-3}$)*** |
| D | humidité | 61.7±4.0 | 58.5±5.3 | 29.7 | 0.66 |
| | immersion | 64.8±4.1 | 64.1±4.7 | | |
| E | humidité | 45.1±2.0 | 52.4±3.3 | 19.2 | 0.64 |
| | immersion | 52.0±1.2 | 47.8±2.1 | | |

*Exemple 4*

La microphotographie d'une coupe transversale de bois imprégné est présentée à la figure 1. Aucun remplissage ne peut être observé mais bien un gonflement des parois cellulaires du bois. Ce gonflement est d'autant plus marqué que la fraction en poids de polyuréthane ($Fw_{PU}$) est élevée (Figure 2). Parallèlement à cette augmentation, on note une diminution du volume poreux du bois. Ces observations confirment la formation d'un réseau interpénétré au sein même des parois cellulaires du bois sans remplissage du lumen.

Imprégnation « one-pot »

*Exemple 5*

Deux échantillons G et H de peuplier (*populus* spp.) de 60 × 60 × 10 $mm^3$ (radial × tangentielle × longitudinale) ont été imprégnés simultanément de PEG 400 et du triisocyanurate protégé suivant :

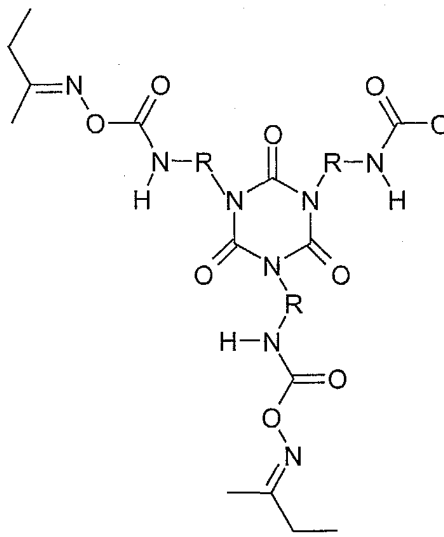

R= $-(CH_2)_6-$

Ce réactif est commercialisé par Rhodia S.A. sous le nom commercial Rhodocoat® WT1000. Pour ce faire, ces échantillons ont été immergés dans une solution aqueuse de PEG 400 dans laquelle le triisocyanurate a été dispersé. Ce mélange a été thermostatisé soit à température ambiante (G) soit à 50°C (H). Les quantités de réactifs ont été ajustées afin que le rapport molaire des fonctions hydroxyles par rapport aux fonctions isocyanates soit égal à 3. Après une immersion de 72h, le bois a été déshydraté en étuve ventilée à 100°C pendant 16h et traité thermiquement à 150°C pendant 30 minutes afin de déprotéger les fonctions isocyanates. Les caractéristiques des échantillons obtenus sont reprises au tableau 5.

Tableau 5 :

| **Caractéristiques des échantillons de bois imprégnés.** | | |
|---|---|---|
| **WPC** | **T (°C)** | **$Fw_{PU}$ (%)** |
| G | 22 | 77.4 |
| H | 50 | 75.9 |

La faible perte de masse mesurée après extraction Soxhlet atteste de l'efficacité de greffage et de la formation d'un réseau interpénétré (tableau 6). Quant à la stabilité dimensionnelle, elle est supérieure (atteignant une valeur supérieure à 50%) dans le cas de l'imprégnation à 50°C pour des valeurs de masse volumique proches.

Les propriétés mécaniques ont été déterminées sous compression, elles restent identiques aux propriétés du bois naturel non imprégné.

Tableau 6 :

| **Stabilité dimensionnelle, tests d'extraction Soxhlet et masse volumique.** | | | | | |
|---|---|---|---|---|---|
| **Echantillon** | **Test** | **$ASE_1$ (%)** | **$ASE_2$ (%)** | **Δm (%)** | **ρ ($g.cm^{-3}$)** |
| G | humidité | 19.3±1.1 | 26.7±3.8 | 24.2 | 0.63 |
| | immersion | 42.0±2.8 | 35.7±1.7 | | |
| H | humidité | 32.1±3.3 | 25.3±0.9 | 26.4 | 0.60 |
| | immersion | 56.6±4.4 | 34.3±1.1 | | |

*Exempl e 6*

Un échantillon I de peuplier (*populus* spp.) de 60 × 60 × 10 $mm^3$ (radial × tangentielle × longitudinale) a été imprégné simultanément de PEG 400 et d'un triisocyanurate protégé commercialisé par Bayer S.A. sous le nom commercial Bayhydur® VP LS 2310 dont la formule est identique à celle de l'agent de couplage utilisé pour l'exemple

5. Pour ce faire, cet échantillon a été immergé dans une solution aqueuse de PEG 400 dans laquelle le triisocyanurate a été dispersé à température ambiante. Les quantités de réactifs ont été ajustées afin que le rapport molaire des fonctions hydroxyles par rapport aux fonctions isocyanates soit égal à 3. Après une immersion de 72h, le bois a été déshydraté en étuve ventilée à 100°C pendant 16h et traité thermiquement à 150°C pendant 30 minutes afin de déprotéger les fonctions isocyanates. En procédant de la sorte, une fraction en poids de polyuréthane de 63.4% a été obtenue.

Au tableau 7, la faible perte trahit le caractère insoluble du polyuréthane généré *in-situ* lors du traitement thermique. La stabilisation dimensionnelle est similaire à celle reportée à l'exemple 5. La densité de cet échantillon reste faible (0.55).

Tableau 7 :

| **Stabilité dimensionnelle, tests d'extraction Soxhlet et masse volumique.** | | | | | |
|---|---|---|---|---|---|
| ***Echantillon*** | ***Test*** | ***$ASE_1$ (%)*** | ***$ASE_2$ (%)*** | **$\Delta m$ (%)** | **$\rho$ ($g.cm^{-3}$)** |
| I | humidité | 17.0±1.7 | 25.4±1.4 | 27.0 | 0.55 |
| | immersion | 40.9±2.0 | 9.0±0.4 | | |

*Exemple 7*

Un échantillon J de peuplier (*populus* spp.) de 60 × 60 × 10 $mm^3$ (radial × tangentielle × longitudinale) a été imprégné simultanément de PEG 400 et d'un triisocyanurate protégé commercialisé par Bayer S.A. sous le nom commercial Bayhydur® VP LS 2310 dont la formule est identique à celle de l'agent de couplage utilisé pour l'exemple 5. Pour ce faire, cet échantillon a été immergé dans une solution aqueuse de PEG 400 dans laquelle le triisocyanurate a été dispersé à température ambiante. Les quantités de réactifs ont été ajustées afin que le rapport molaire des fonctions hydroxyles par rapport aux fonctions isocyanates soit égal à 3. Après une immersion de 72h, le bois a été déshydraté en étuve ventilée à 100°C pendant 16h et traité thermiquement à 150°C pendant 30 minutes afin de déprotéger les fonctions isocyanates. Un revêtement polyuréthane (vernis vitrificateur) a ensuite été appliqué en surface de l'échantillon. La fraction en poids de polyuréthane obtenue était de 59.3%. Il s'avère que l'application en surface du revêtement polyuréthane réhausse la stabilité dimensionnelle. Les valeurs des ASE atteignent plus de 60% après conditionnement en atmosphère humide similairement aux échantillons précédents, la masse volumique reste largement inférieure à l'unité (en $g.cm^{-3}$).

Tableau 8 :

| **Stabilité dimensionnelle.** | | | |
|---|---|---|---|
| ***Echantillon*** | ***Test*** | ***$ASE_1$* (%)** | ***$ASE_2$* (%)** |
| J | humidité | 64.4±11.5 | 62.8±9.9 |
| | immersion | 48.6±2.1 | 41.9±1.0 |

*Exemple 8*

Un échantillon K de peuplier (populus spp.) de 30 × 30 × 10 $mm^3$ (radial × tangentielle × longitudinale) a été imprégné simultanément de PEG 400 et de PEG fonctionnalisé par le carbonyle-biscaprolactame (CBC). Cette réaction conduit à l'obtention de fonctions isocyanates protégés aux extrémités des chaînes de PEG. Pour ce faire, les oligomères de PEG (6g) ont été séchés sous vide à 105°C pendant une nuit afin d'éviter une hydrolyse de la CBC. 8.32g de CBC ont alors été introduits sous azote et la réaction menée à 120°C pendant 6h. Le schéma de la réaction est repris ci-dessous :

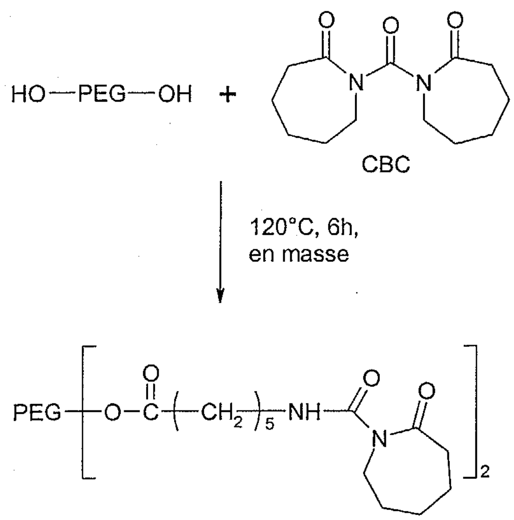


Le PEG fonctionnalisé a été mis en solution dans 30 ml d'eau afin d'obtenir une concentration de 0.5 mol.$L^{-1}$ et 6 g de PEG 400 ont été ajoutés à la solution. L'échantillon de bois a ensuite été immergé dans cette solution pendant 120h. Passé ce délai, le bois a été déshydraté à 60°C sous vide pendant 16h et un traitement thermique a été réalisé pendant 2h à 150°C. L'incorporation du polymère s'est effectuée de la manière attendue.

*Exemple 9*

Les propriétés mécaniques d'échantillons de bois imprégné présentant des fractions en poids de polyuréthane différentes ont été évaluées par le biais de tests de flexion (parallèle aux fibres) et de compression (perpendiculaire aux fibres). Les résultats obtenus pour ces composites sont comparés à ceux obtenus le peuplier non traité.

Les tests de flexion ont été effectués sur 4 éprouvettes de 54 x 10 x 10 $mm^3$ (axial x radial x tangentiel) préalablement conditionnées à un taux d'humidité de 40% et une température de 20°C pendant 24h. Les résultats obtenus sont repris au tableau 9. Comme on peut le constater et contrairement à de nombreuses autres modifications chimiques, l'imprégnation aux polyuréthanes n'altère pas les propriétés mécaniques du bois.

Tableau 9 :

| **Tests de flexion** | | | |
|---|---|---|---|
| ***Echantillon*** | ***Fw (%)*** | ***Module d'Young (MPa)***[a] | ***Déflexion à la rupture (%)*** |
| Peuplier non traité | 0 | 98.2 ± 9.2 | 14.5 ± 2.5 |
| Olpe C6 | 113.1 | 110.4±15.1 | 13.7±0.9 |
| Olpe C7 | 89.6 | 96.1 ± 11.3 | 14.3 ± 1.4 |

a) défini comme étant la plus grande pente de la courbe « Contrainte-Déflexion »

Les tests de compression ont été effectués sur 4 éprouvettes de 10 x 18 x 10 $mm^3$ (axial x radial x tangentiel) conditionnées à un taux d'humidité de 40% et une température de 20°C pendant 24h. La contrainte est appliquée perpendiculairement aux fibres et parallèlement à la direction tangentielle. Les résultats obtenus sont repris au tableau 10. Une légère augmentation du module d'Young est observée dans le cas du composite C7.

Tableau 10 :

| **Tests de compression** | | |
|---|---|---|
| ***Echantillon*** | ***$Fw_{PU}$ (%)*** | ***Module d'Young (MPa)***[a] |
| Peuplier non traité | 0 | 78.9 ± 7.1 |
| Olpe C6 | 113.1 | 109.1 ± 22.5 |
| Olpe C7 | 89.6 | 115.5 ± 6.6 |

Tableau 10 : (suite)

| Tests de compression | | |
|---|---|---|
| ***Echantillon*** | ***$Fw_{PU}$* (%)** | ***Module d'Young (MPa)*[a]** |
| b) défini comme étant la plus grande pente de la courbe « Contrainte-Déformation » | | |

En résumé, le procédé de traitement selon la présente invention présente de nombreux avantages par rapport à l'état de la technique.

Ainsi, outre le gain de temps qu'il permet, le fait que ce procédé puisse s'appliquer à un élément en bois dit « debout » permet de revaloriser des essences dépréciées de par leurs propriétés mécaniques médiocres (i.e. peuplier, pin sylvestre, ...) ; essences qui, étant de faible densité, sont intrinsèquement aisément imprégnables.

En outre, la mise en oeuvre du procédé selon l'invention peut être effectuée dans des conditions de travail améliorées, notamment par rapport au procédé décrit dans le brevet belge BE 799.494 qui produit des vapeurs toxiques, que ce soit en terme de sécurité pour le personnel ou en terme de respect vis-à-vis de l'environnement. Par ailleurs, en opposition à l'imprégnation en deux étapes et impliquant la vaporisation de l'agent de couplage diisocyanate, les observations par microscopie électronique à balayage de coupes de bois imprégné par le procédé selon la présente invention, démontrent un profil homogène d'imprégnation et de réticulation sur toute la hauteur/profondeur de l'échantillon.

## Revendications

**1.** Procédé de traitement d'un élément en bois, de préférence en bois dit « debout », comprenant une étape d'imprégnation dans laquelle on imprègne ledit élément avec au moins une substance d'imprégnation, et une étape de réticulation de ladite substance d'imprégnation au cours de laquelle on fait réagir celle-ci avec au moins un agent de réticulation ou agent de couplage, de manière à obtenir au sein du bois au moins un produit de réaction insoluble dans l'eau, ledit procédé étant **caractérisé en ce que** l'étape d'imprégnation et l'étape de réticulation de la substance d'imprégnation sont effectuées au départ d'un même bain, dit « bain d'imprégnation ».

**2.** Procédé de traitement d'un élément en bois, de préférence en bois dit « debout », comprenant les étapes suivantes :

- on prépare un bain dit « bain d'imprégnation » et comprenant au moins une substance d'imprégnation apte à imprégner le bois, un agent de réticulation apte à provoquer la réticulation du bois, et éventuellement au moins un catalyseur ;
- on plonge ledit élément en bois dans ledit bain d' imprégnation ;
- on fait réagir ledit élément de bois avec les composants dudit bain de manière à provoquer au cours d'une étape dite « d'imprégnation » une imprégnation dudit élément avec ladite substance d'imprégnation, et au cours d'une étape de réticulation une réticulation du bois par réaction avec la substance d'imprégnation au sein du bois.

**3.** Procédé selon la revendication 1 ou 2, **caractérisé en ce que** la substance d'imprégnation est une substance hydrosoluble mono- ou poly-fonctionnelle comprenant un ou plusieurs hydrogènes actifs aptes à gonfler les parois cellulaires du bois.

**4.** Procédé selon la revendication 3, **caractérisé en ce que** la substance d'imprégnation est sélectionnée parmi le groupe constitué par les monols et les polyols, leurs dérivés et les mélanges de ceux-ci, de préférence polyfonctionnels.

**5.** Procédé selon la revendication 4, **caractérisé en ce que** la substance d'imprégnation est sélectionnée parmi le groupe constitué par les polyéthers mono- et polyols, les polyacryliques mono- et polyols, les polyvinyliques mono- et polyols, les polysaccharides, les dérivés de ceux-ci dans lesquels au moins une fonction hydroxyle est substituée par une fonction thiol ou amine, et les mélanges et copolymères de ceux-ci.

**6.** Procédé selon les revendications précédentes, caractérisé en ce l'agent de réticulation ou agent de couplage est sélectionné parmi le groupe constitué par les composés que sont les polyisocyanates, leurs dérivés et les mélanges

de ceux-ci, les fonctions isocyanates desdits composés étant protégées dans les conditions standard d'utilisation de manière à les rendre inertes vis-à-vis de l'eau, et susceptibles d'être déprotégées par un traitement adéquat.

7. Produit selon la revendication 6, **caractérisé en ce que** l'agent de réticulation ou agent de couplage est un diisocyanate dont les fonctions isocyanates sont protégées, de préférence le carbonylbis-caprolactame ou CBC.

8. Procédé selon l'une des revendications précédentes, **caractérisé en ce que** le produit de réaction finalement obtenu au sein de l'élément en bois est un polyuréthane.

9. Procédé selon l'une des revendications précédentes, **caractérisé en ce qu'**il comprend une étape supplémentaire de traitement thermique à une température comprise entre 50°C et 250°C, et de préférence entre 100 et 150°C, et dont la durée est prédéterminée.

10. Procédé selon l'une des revendications précédentes, **caractérisé en ce que** la durée de l'étape de traitement thermique est comprise entre 5 minutes et 5 heures, et de préférence entre 15 minutes et 120 minutes.

11. Procédé selon la revendication 8 ou 9, **caractérisé en ce qu'**il comprend en outre une étape additionnelle réalisée avant l'étape de traitement thermique et correspondant à une étape de déshydratation de l'élément en bois.

12. Procédé selon la revendication 10, **caractérisé en ce que** la déshydratation de l'élément en bois est réalisée par chauffage ou par dépressurisation.

13. Elément en bois obtenu à l'aide du procédé selon l'une des revendications précédentes.

14. Bain d'imprégnation pour mettre en oeuvre le procédé selon l'une des revendications précédentes.

15. Bain selon la revendication 14, comprenant au moins une substance d'imprégnation, au moins un agent de couplage, et éventuellement un catalyseur.

16. Utilisation du procédé et/ou de l'élément en bois et/ou du bain d'imprégnation selon l'une des revendications précédentes dans le domaine des revêtements, tels que les revêtements de mur et/ou de sols, les parquets, les plans de travail, les panneaux, et les meubles.

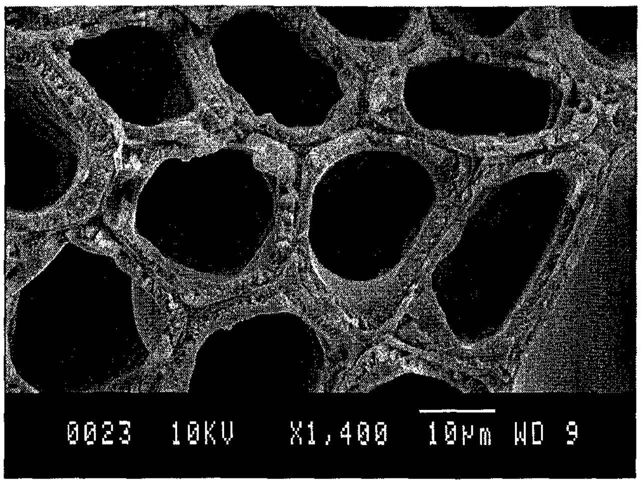
0023 10KV X1,400 10μm WD 9

Fig. 1

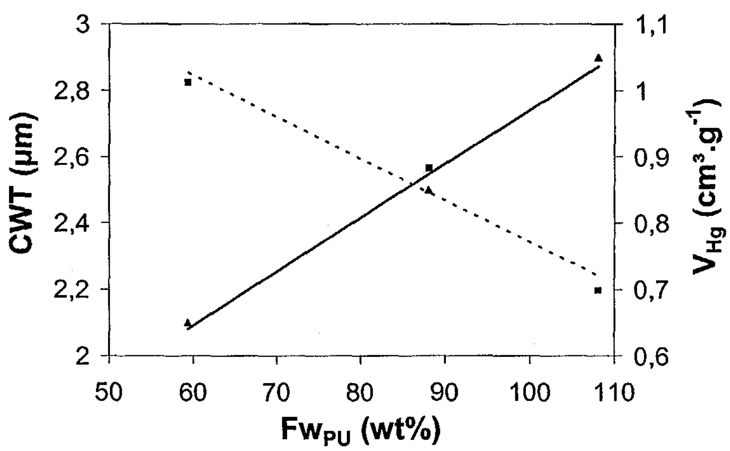
CWT (μm)
3
2,8
2,6
2,4
2,2
2
50
60
70
80
90
100
110
Fw$_{PU}$ (wt%)
1,1
1
0,9
0,8
0,7
0,6
V$_{Hg}$ (cm$^3$.g$^{-1}$)

Fig. 2

Office européen des brevets

# RAPPORT DE RECHERCHE EUROPEENNE

Numéro de la demande
EP 03 44 7024

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | DE 20 07 591 A (BUTLER ET AL.) 2 septembre 1971 (1971-09-02) * page 2 - page 3; revendications 1-3 * | 1-8, 11-16 | B27K3/15 |
| X | WO 97 02134 A (NICHOLAS DARREL D ;PITTMAN CHARLES U (US); KABIR AHMED (US); KIM M) 23 janvier 1997 (1997-01-23) * revendications 1-3; exemples 1,2 * | 1,2,6, 8-16 | |
| X | DE 20 59 625 A (ELO EINO AUGUST) 9 juin 1971 (1971-06-09) * le document en entier * | 1,2,6, 8-10, 13-16 | |
| X | US 3 795 533 A (KHARAITI LAL GAURI) 5 mars 1974 (1974-03-05) * abrégé; revendications 1-13; exemple 4 * | 1,2,11, 13-16 | |
| A | US 6 191 213 B1 (TOMKO REVATHI R ET AL) 20 février 2001 (2001-02-20) * revendication 11 * | 3-5 | |

| DOMAINES TECHNIQUES RECHERCHES (Int.Cl.7) |
|---|
| B27K |
| B05D |

Le présent rapport a été établi pour toutes les revendications

| Lieu de la recherche | Date d'achèvement de la recherche | Examinateur |
|---|---|---|
| MUNICH | 7 juillet 2003 | Connor, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO. EP 03 44 7024

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-07-2003

| Document brevet cité au rapport de recherche | | Date de publication | Membre(s) de la famille de brevet(s) | | Date de publication |
|---|---|---|---|---|---|
| DE 2007591 | A | 02-09-1971 | DE | 2007591 A1 | 02-09-1971 |
| WO 9702134 | A | 23-01-1997 | AU | 6508696 A | 05-02-1997 |
| | | | AU | 6602996 A | 05-02-1997 |
| | | | AU | 6680696 A | 05-02-1997 |
| | | | WO | 9702134 A1 | 23-01-1997 |
| | | | WO | 9702135 A1 | 23-01-1997 |
| | | | WO | 9702136 A1 | 23-01-1997 |
| DE 2059625 | A | 09-06-1971 | AT | 311032 B | 25-10-1973 |
| | | | DE | 2059625 A1 | 09-06-1971 |
| US 3795533 | A | 05-03-1974 | AUCUN | | |
| US 6191213 | B1 | 20-02-2001 | AU | 6096096 A | 30-12-1996 |
| | | | BR | 9608714 A | 29-06-1999 |
| | | | EP | 0831975 A1 | 01-04-1998 |
| | | | JP | 11507403 T | 29-06-1999 |

EPO FORM P0460

Pour tout renseignement concernant cette annexe : voir Journal Officiel de l'Office européen des brevets, No.12/82